# EUROPEAN PATENT APPLICATION

(11) **EP 4 684 846 A1**
(43) Date of publication of application: **28.01.2026**
(21) Application number: 24211908.9
(22) Date of filing: 08.11.2024
(51) Int. Cl.: A63B 24/00, A63B 22/02

(54) **DRIVING DEVICE OF TREADMILL, AND TREADMILL**

(30) Priority: 22.07.2024 CN 202421731814 U
(71) Applicant: Xiamen Renhe Sports Equipment Co.,Ltd., Xiamen Fujian (CN)
(72) Inventor: REN, Yangjie, Xiamen (CN)
(74) Representative: Murgitroyd & Company

(57) **Abstract**

The present disclosure provides a driving device of a treadmill, and a treadmill. A servo motor of the driving device of a treadmill is internally and/or externally provided with an encoder, and connected to a controller through the encoder. A transmission shaft of the servo motor is in transmission connection with a roller of the treadmill. The controller is used to adjust change direction and change amplitude of a rotation angle of the servo motor by transmitting a control signal to the encoder, thus driving the roller of the treadmill to vibrate horizontally or rotate in one direction. Based on the driving device of the treadmill, a treadmill or a treadmill can drive a roller of a treadmill, thus driving a belt to vibrate, rotate in one direction, or vibrate horizontally in the process of rotating in one direction.

## Description

### TECHNICAL FIELD

The present disclosure relates to the technical field of fitness equipment, and in particular to a driving device of a treadmill, and a treadmill.

### BACKGROUND

In recent years, with the emphasis on healthy living and the acceleration of the pace of life, family fitness equipment has gradually become a hot spot in the market. With the development of the industry, users put forward higher requirements for fitness equipment.

Traditional treadmills often only provide a single straight-line walking or running function, which lacks variability and interest and is difficult to meet the diverse sports needs of users. The long-term use of the same exercise mode not only easily leads to exercise fatigue and boredom, but also may affect the fitness effect.

Therefore, there is an urgent need for multi-functional and interesting fitness equipment to enhance the experience of the user and ensure the fitness effect of the user.

### SUMMARY

In order to solve the problem above, the present disclosure provides a driving device of a treadmill and a treadmill, which can achieve a variety of exercise modes and improve the use experience and fitness effect of the user.

In a first aspect, the present disclosure provides a driving device of a treadmill, which includes rollers of a treadmill, a servo motor, and a controller;
the servo motor is internally and/or externally provided with an encoder, and the encoder is connected to the controller; and a transmission shaft of the servo motor is in transmission connection with the roller of the treadmill.

In a possible implementation, the controller is used to transmit a control signal to the encoder, thus adjusting change direction and change amplitude of a rotation angle of the servo motor
when the rotation angle of the servo motor (2) is in bidirectional alternate change, the roller of the treadmill is driven to vibrate horizontally; and when the rotation angle of the servo motor is in unidirectional change, the roller of treadmill is driven to rotate in one direction.

In a possible implementation, in the bidirectional alternate change of the rotation angle of the servo motor:
when a change amplitude of a rotation angle of a rotor of the servo motor (2) in a first direction is greater than that in a second direction, the roller of the treadmill is driven to vibrate horizontally in the process of unidirectional rotation in the first direction; and
a frequency of the horizontal vibration corresponds to a difference between the change amplitude of the rotation angle in the first direction and the change amplitude of the rotation angle in the second direction.

In a possible implementation, in one bidirectional alternate change cycle of the rotor of the servo motor;
during the process that the rotor of the servo motor undergoes the rotation angle change with a first amplitude in the first direction, when the rotor of the servo motor (2) changes back and forth in the first direction and the second direction with a second amplitude within a set vibration cycle, the roller of the treadmill is driven to horizontally sweep at a first frequency and meanwhile horizontally vibrate at a second frequency;
the set vibration cycle is smaller than the bidirectional alternate change cycle, the first amplitude is greater than the second amplitude, and the first frequency is less than the second frequency.

In a possible implementation, the driving device of the treadmill further includes:
a speed regulating transmission mechanism, where the transmission shaft of the servo motor is connected to the roller of the treadmill by means of the speed regulating transmission mechanism.

In a possible implementation, the controller includes a communication module;
the communication module is any one or a hybrid module of a plurality of a Bluetooth module, a WiFi module, an infrared receiving module, a wireless radio frequency receiving module, and a cellular communication module.

In a second aspect, a treadmill is provided, including a running platform, a wear-resisting plate (6) arranged on an upper side of the running platform, a belt wrapped around a roller of the treadmill; The treadmill further includes the driving device of the treadmill according to the first aspect, and the roller of the treadmill in the driving device of the treadmill is in transmission connection with the belt.

In a possible implementation, the running platform (5) is of an integrally formed structure.

The technical solution provided by the present disclosure at least have the following beneficial effects:
According to the driving device of the treadmill provided by the present disclosure, the servo motor is internally and/or externally provided with an encoder, and the encoder is used to feed back parameters such as a rotor angle (position), speed, a current and the like of the motor back to the controller in real time for closed-loop or semi-closed-loop control.

### BRIEF DESCRIPTION OF THE DRAWINGS

To describe the technical solutions of the present disclosure more clearly, the following briefly introduces the accompanying drawings required for describing the embodiments. Apparently, the accompanying drawings in the following description show merely some embodiments of the present disclosure, and those of ordinary skill in the art may still derive other drawings from these accompanying drawings without creative efforts.
FIG. 1 is a schematic diagram of a three-dimensional structure of a driving device of a treadmill according to an embodiment of the present disclosure;
FIG. 2 is a schematic diagram of a three-dimensional structure of a treadmill according to an embodiment of the present disclosure;
FIG. 3 is a schematic diagram of a three-dimensional structure of various components of a treadmill according to an embodiment of the present disclosure;
FIG. 4 is a schematic diagram of an integrated running platform according to an embodiment of the present disclosure;
FIG. 5 is a schematic diagram of a three-dimensional structure of various components of another treadmill according to an embodiment of the present disclosure;
FIG. 6 is another schematic diagram of a three-dimensional structure of various components of the treadmill according to an embodiment of the present disclosure (in which a schematic diagram of a running platform is hidden).
FIG. 7 is side internal schematic diagram of a support portion on one side of a running platform of another treadmill according to an embodiment of the present disclosure (which is an internal structure schematic diagram acquired by damaging a protective cover on one side of the treadmill shown in FIG. 1 and partial outer wall of the support portion);
FIG. 8 is a sectional schematic diagram of a three-dimensional structure of a treadmill according to an embodiment of the present disclosure (this is a longitudinal sectional structural diagram acquired along an A-A' dotted line in FIG. 1).
FIG. 9 is a partial enlarged schematic diagram of various components of a treadmill according to an embodiment of the present disclosure within the circle range in FiG.8.
FIG. 10 is a structural schematic diagram of a bottom view of a treadmill according to an embodiment of the present disclosure.

Reference numerals in the drawings are as follows:
1-roller of treadmill; 1a-front roller; 1b-rear roller;
2-servo motor; 201-dustproof cover;
3-controller; 4-speed regulating transmission mechanism; 5-running platform; 5a-groove;6-wear-resisting plate; 7-belt; 8-protective cover; 9-reinforcing plate; 10-cushion block; 11-remote controller; 101-tightness adjusting member.

Explicit embodiments in the present disclosure have been shown through the foregoing accompanying drawings, and more detailed descriptions are provided below. These accompanying drawings and literal descriptions are not intended to limit the scope of the conception of the present disclosure in any manner, but explain the conception of the present disclosure with reference to specific embodiments for those skilled in the art.

### DETAILED DESCRIPTION OF THE EMBODIMENTS

The present disclosure provides accompanying drawings for further description of various embodiments. These accompanying drawings are a part of the disclosure of the present disclosure, which are mainly used to explain the embodiment, and can explain the operation principle of the embodiments in conjunction with the relevant description in this specification. With reference to these contents, those of ordinary skill in the art should be able to understand other possible implementations and the advantages of the present disclosure. Assemblies in the drawings are not drawn to scale, and similar assembly symbols are usually used to represent similar assemblies.

The present disclosure is further described below with reference to accompanying drawings and specific embodiments.

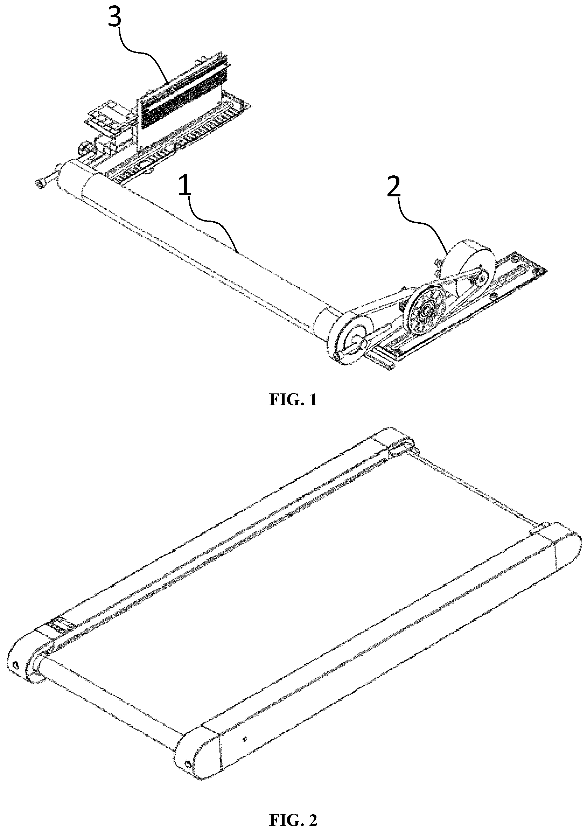

The embodiment of the present disclosure provides a driving device of a treadmill, which can be used for a treadmill, a treadmill, and any other fitness equipment that needs to drive its transmission on the horizontal plane. FIG. 1 shows a driving device of a treadmill according to an embodiment of the present disclosure. As shown in FIG. 1, the driving device of a treadmill includes a roller 1 of the treadmill, a servo motor 2, and a controller 3.

In the embodiment of the present disclosure, the driving device of a treadmill includes a roller 1 of the treadmill, a servo motor 2, and a controller 3.

The servo motor 2 is internally and/or externally provided with an encoder, and is connected to the controller 3 through the encoder. A transmission shaft of the servo motor 2 is in transmission connection with the roller 1 of the treadmill . Exemplary, a self-contained encoder in the servo motor 2 can be used to feed back parameters such as a rotor angle (position), speed, a current and the like of the motor back to the controller 3 in real time for closed-loop or semi-closed-loop control. An encoder outside the servo motor 2 may also be used to achieve the above function. It is also possible to employ the encoder inside the servo motor 2 to achieve the collection of above parameters, and employ the encoder outside the servo motor 2 to achieve the transceiving of data, thus adapting to a multi-motor scene or the testing of additional parameters such as a torque, and vibration.

Exemplary, a treadmill which is designed according to a rated voltage of 110 V in the America is used as an example, if a rated voltage is 110 V, a current of the motor during operation is 5.5-6 A, and operation power is 60 HZ.

The overall size of the running platform can adopt the common size of the running platform, or select a running platform smaller than the common size according to the miniaturization requirement of the treadmill, thus matching the requirements for the size of the treadmill.

In an embodiment of the present disclosure, the controller 3 is used to achieve the electric control of the whole device. Specifically, the controller 3 transmits a control signal to the encoder, thus adjusting change direction and change amplitude of a rotation angle of the servo motor 2. The change direction indicates whether the rotation angle is in forward rotation or reverse rotation, which can decide a direction of an output torque of the servo motor 2. The change amplitude indicates the speed of change of the rotation angle, which can decide an output speed of the servo motor 2.

In an embodiment of the present disclosure, a variety of driving modes can be achieved by performing bidirectional alternate change and unidirectional change on the rotation angle of the servo motor 2. The multiple driving modes are described below.

### Driving mode A: horizontal vibration

Specifically, when the rotation angle of the servo motor 2 is in bidirectional alternate change, the roller 1 of the treadmill is driven to vibrate horizontally. The bidirectional alternate change of the rotation angle of the servo motor 2 indicates that the rotation angle reversely rotates for a certain angle after rotating forward for a certain angle, thus achieving a movement track of rotating back and forth in two opposite directions. When the speed of forward rotation and reverse rotation reaches a certain value, the roller 1 of the treadmill is driven to achieve a horizontal vibration effect. From the somatosensory of the user, the horizontal vibration can achieve a somatosensory effect of vibratory massage, such that the driven fitness equipment (e.g., a treadmill and a treadmill) can achieve massage effect while providing basic functions.

The treadmill which uses a voltage of 110 V and an alternating current (AC) with a frequency of 60 Hz is taken as an example. In a horizontal vibration mode, when the treadmill vibrates horizontally in 1st gear, the controller 3 inputs a frequency F1 into the motor to make the motor reversely rotate one turn after rotating forward one turn according to a rotational speed X1, then a belt is displaced backwards by a distance S1 after displacing forward by a distance S1. Similarly, when the treadmill vibrates horizontally in 2nd gear, a frequency F2 is input into the motor to make the motor reversely rotate one turn after rotating forward one turn according to a rotational speed X2. The greater the frequency, the higher the rotational speed of the motor, that is, the more times of back-and-forth displacements within the same amount of time. For example, when the F1 is less than the F2, the X1 is less than the X2, and a vibration frequency in the 2nd gear is higher, which makes the sense of vibration stronger for a user standing on the treadmill.

In a possible implementation, the driving mode A may also be enriched into multiple modes combining the horizontal vibration.

### A1. Constant-speed walking/running mode with horizontal vibration effect

Specifically, in the bidirectional alternate change of the rotation angle of the servo motor 2: when a change amplitude of a rotation angle of a rotor of the servo motor 2 in a first direction is greater than that in a second direction, the roller 1 of the treadmill is driven to vibrate horizontally in the process of unidirectional rotation in the first direction. This process can be regarded as that the general trend is in the process of rotating in the first direction, and the vibration effect can be achieved by periodically rotating back to the second direction with a certain amplitude.

A frequency of the horizontal vibration corresponds to a difference between the change amplitude of the rotation angle in the first direction and the change amplitude of the rotation angle in the second direction.

### A2. Back-and-forth sweeping mode with horizontal vibration effect (sweeping and vibration integration)

Specifically,, in one bidirectional alternate change cycle of the rotor of the servo motor 2: during the process that the rotor of the servo motor 2 undergoes the rotation angle change with a first amplitude in the first direction, when the rotor of the servo motor 2 changes back and forth in the first direction and the second direction with a second amplitude within a set vibration cycle, the roller 1 of the treadmill is driven to horizontally sweep at a first frequency and meanwhile horizontally vibrate at a second frequency. This process can be regarded as that the back-and-forth vibration effect with a small amplitude is always kept in the process of large-amplitude horizontal back-and-forth cyclic displacement.

The set vibration cycle is smaller than the bidirectional alternate change cycle, the first amplitude is greater than the second amplitude, and the first frequency is less than the second frequency.

The treadmill which uses a voltage of 110 V and an AC with a frequency of 60 Hz is taken as an example. And, the realization process of the "sweeping and vibration integration" mode is as follows. In one case, the roller 1 of the treadmill rotates forward for 2-6 turns to make the belt displaced forward by 40-60 mm, and then rotates reversely for 1-5 turns to make the belt displaced backward by 30-40 mm. At this time, the belt is equivalent to be displaced forward by 10-20 mm, and meanwhile, the vibration effect is brought by the periodic forward and reverse rotation in this process.

In another case, the roller 1 of the treadmill rotates forward for 1-8 turns to make the belt displaced forward by 10-20 mm, then rotates reversely for 1-8 turns to make the belt displaced backward by 10-20 mm, and then rotates forward for 1-8 turns to make the belt displaced forward by 10-20 mm. At this time, the belt is equivalent to be displaced forward by 10-20 mm, and meanwhile, the vibration effect is kept by the periodic forward and reverse rotation in this cycle.

### Driving mode B: unidirectional rotation

Specifically, when the rotation angle of the servo motor 2 is in unidirectional change, the roller 1 of the treadmill is driven to rotate unidirectionally. This mode may include a walking function and a running function based on constant speed and/or variable speed. The driving device of a treadmill provided by the present disclosure can drive the roller 1 of the treadmill to rotate forward, or drive the roller 1 of the treadmill to rotate reversely.

In a possible implementation, the driving device of the treadmill further includes a speed regulating transmission mechanism 4. A torque output by the transmission shaft of the servo motor 2, which is regulated by the speed regulating transmission mechanism, is input into the roller 1 of the treadmill. The speed regulating transmission mechanism 4, for example, is a speed reducer, a pulley and belt, a sprocket or chain, etc.

Specifically, a combined structure of the pulley and the belt is relatively simple and easy to install and maintain. Belt transmission has the functions of cushioning and shock absorption, and can also reduce the impact and vibration during transmission. Moreover, a transmission ratio can be conveniently changed by adjusting a diameter ratio of the pulley, thus adjusting an output torque of the servo motor 2.

In a possible implementation, the controller 3 includes a communication module. The controller 3 is used to receive a trigger instruction through the communication module, and transmit a control signal to the encoder according to the trigger instruction.

Alternatively, the communication module is any one or a hybrid module of a plurality of a Bluetooth module, a WiFi module, an infrared receiving module, a wireless radio frequency receiving module, and a cellular communication module.

Exemplary, when the communication module is the infrared receiving module, it is supported to control the controller 3 through the remote controller, thus achieving the switching of different driving modes and providing the user with different exercise modes. When the communication module is the Bluetooth module or WiFi module, it is supported to control the controller 3 through terminal units such as a mobile phone, a smart watch, a computer, etc., thus achieving the switching of different driving modes and providing the user with different exercise modes.

According to the driving device of the treadmill provided by the present disclosure, the horizontal rhythm which is beneficial to physiological health is used to achieve a variety of exercise modes, thus improving the use experience and fitness effect of the user. Moreover, multiple interaction modes are provided to control the driving modes of the device, making it more convenient for user. The horizontal rhythm can promote blood circulation and assist in the prevention of cardiovascular diseases.

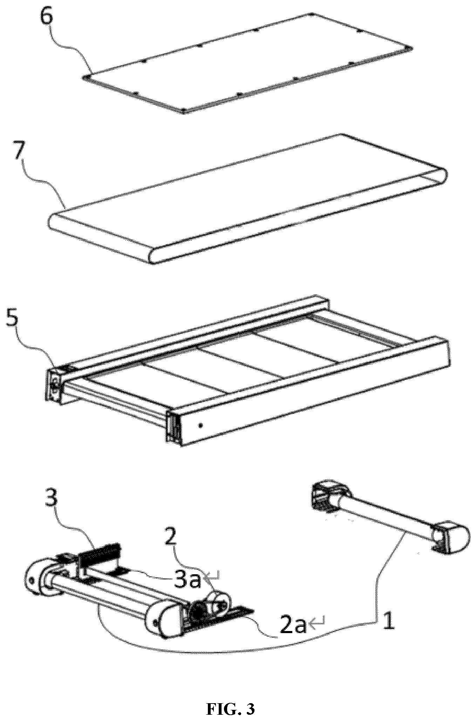

An embodiment of the present disclosure provides a treadmill. FIG. 2 is a schematic diagram of a three-dimensional structure of a treadmill according to an embodiment of the present disclosure, which illustrates an overall external configuration of the treadmill. FIG. 3 is a schematic diagram of a three-dimensional structure of various component of a treadmill according to an embodiment of the present disclosure. As shown in FIG. 3, the treadmill includes a running platform 5, a wear-resisting plate 6 arranged on an upper side of the running platform 5, a belt 7 wrapped around the roller 1 of the treadmill, and a driving device of the treadmill. The driving device of the treadmill includes a roller 1 of the treadmill, a servo motor 2, and a controller 3. The roller 1 of the treadmill drives the belt 7 to vibrate, rotate unidirectionally, or vibrate horizontally in the process of unidirectional rotation.

In the embodiment of the present disclosure, the treadmill includes a running platform 5, a wear-resisting plate 6 arranged on the upper side of the running platform 5, a belt 7 wrapped around the roller 1 of the treadmill, and the driving device of the treadmill above. The roller 1 of the treadmill in the device can drive the belt 7 to vibrate, rotate unidirectionally, or vibrate horizontally in the process of unidirectional rotation.

Alternatively, the running platform 5 is integrally formed. The integrally formed running platform 5 is more cost saving, and has high assembly efficiency, easy maintenance and low failure rate. Further, the weight of the running platform can be reduced by using engineering plastics (e.g., polycarbonate, nylon, ABS (Acrylonitrile Butadiene Styrene), etc.) or carbon fiber composites as the material of the running platform. More specifically, the composites may be a material obtained by compounding polypropylene (PP) with 10-30wt% of glass fiber (GF), that is, 10-30wt% (for example, 10 wt%, 15 wt%, 20wt%, 25wt% or 30wt%) of glass fiber (GF) is added into the polypropylene (PP) for modification and reinforcement.

A frame of the traditional treadmill is basically assembled by an iron frame, a chassis, etc., which is often bulkier and requires a larger use space and is undoubtedly a big burden for the family with limited living space. The treadmill provided by the present disclosure is more portable, miniaturized, easy to store and suitable for home use.

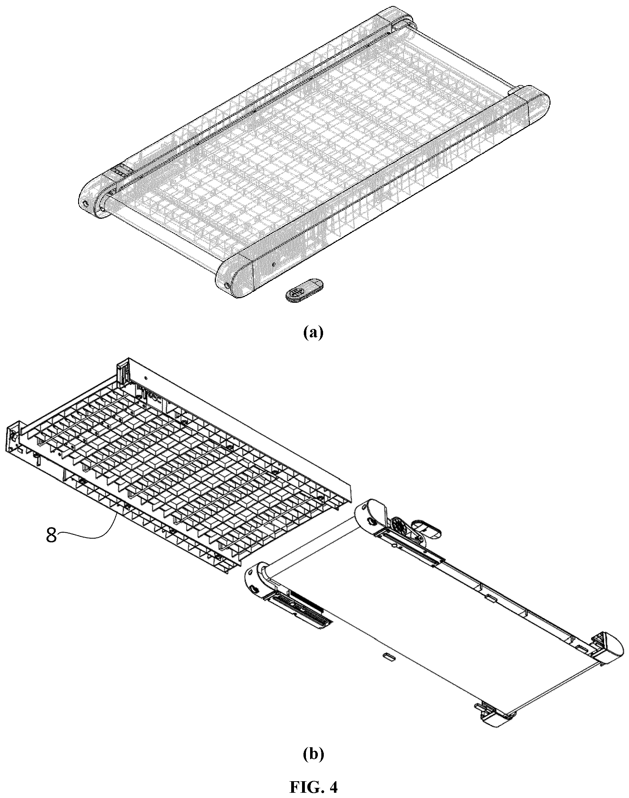

FIG. 4 is a schematic diagram of an integrated running platform according to an embodiment of the present disclosure. As shown in FIG. 4, part (a) in FIG. 4 shows the shape and structure of a running platform 5 of the treadmill at the bottom side under a perspective angle, and part (b) in FIG. 4 shows a three-dimensional structure of the running platform 5 of the treadmill separately disassembled under a angle from the bottom to the top.

Alternatively, the servo motor 2 in the driving device of the treadmill according to the present disclosure has the characteristics of miniaturization, which can be flexibly arranged inside the running platform 5. There is no need to additionally provide a placement space for the motor, and the space can be effectively saved. For example, the servo motor 2 is arranged inside one side of the running platform 5, and the controller 3 is located inside the other side of the running platform 5. For another example, the servo motor 2 and a belt wheel connected to the servo motor 2 are placed inside a left side of the running platform 5, and the controller 3 is arranged inside a right side of the running platform 5. Certainly, considering the balance of counterweight, aesthetics and functional connection theoretically, any position in the running platform 5 can be selected to place all components in the driving device of the treadmill in a dispersed or centralized manner, which is not limited in the present disclosure.

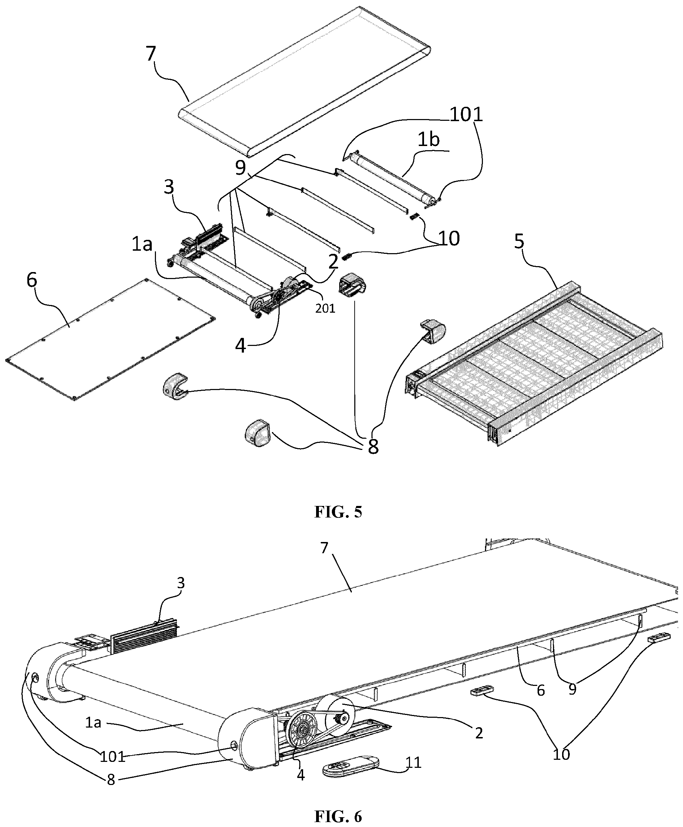

FIG. 5 is a schematic diagram of a three-dimensional structure of various components of another treadmill according to an embodiment of the present disclosure. Various optional components of the treadmill in various possible implementations are described below with reference to FIG. 5.

In a possible implementation, the roller 1 of the treadmill includes a front roller 1a, and a rear roller 1b. Both ends of the front roller 1a and both ends of the rear roller 1b are arranged outside installation corners on the running platform 5, and are provided with protective covers 8.

In a possible implementation, the roller 1 of the treadmill is provided with a tightness adjusting member 101, which is used to adjust the tightness of the belt 7 wrapped around the roller of the treadmill 1. Alternatively, the tightness adjusting member 101 is an adjusting bolt, and both ends of the rollers (1a and 1b) of the treadmill are respectively provided with one adjusting bolt. Roller seats are driven to move back and forth by rotating the adjusting bolts at the rollers (1a and 1b) of the treadmill, and then the tightness of the belt 7 can be adjusted to maintain the stable operation of the belt 7, and reduce slippage and wear.

In a possible implementation, the treadmill further includes at least one of the following accessories.

Reinforcing plate: at least one reinforcing plate 9 is arranged between the running platform 5 and the wear-resisting plate 6, and the reinforcing plate 9 is used for supporting and reducing vibration.

Dustproof cover: the servo motor 2 in the driving device of the treadmill is provided with a dustproof cover 201.

Cushion block: At least one cushion block 10 is arranged at the lower side of the running platform 5, which is used for anti-skid and sound insulation.

The embodiment of the present disclosure provides another structural schematic diagram of the treadmill, in which a structure of the running platform is hidden. As shown in FIG. 6, the front roller 1a is taken as an example, the protective covers 8 are installed at both ends of the front roller 1a, and the front roller 1a is also provided with tightness adjusting members 101 in the protective covers 8, preferably, the tightness adjusting member 101 is an adjusting bolt.

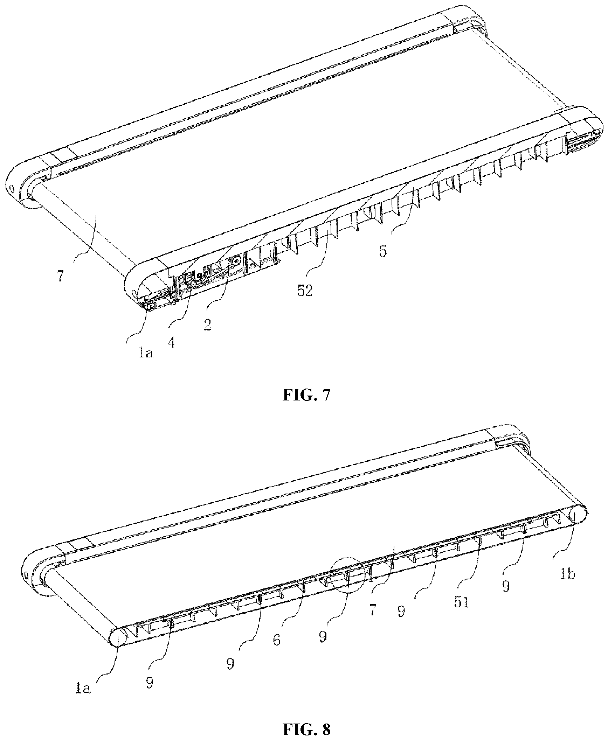

As shown in FIG. 6, the servo motor 2 and the speed-regulating transmission mechanism 4 are arranged on one side of the belt 7. As shown in FIG. 7, the servo motor 2 and the speed-regulating transmission mechanism 4 are embedded into the accommodating groove of the support portion 52 on one side of the running platform 5. The controller 3 is arranged on the other side of the belt 7, and embedded into the accommodating groove of the support portion 52 on the other side of the running platform 5.

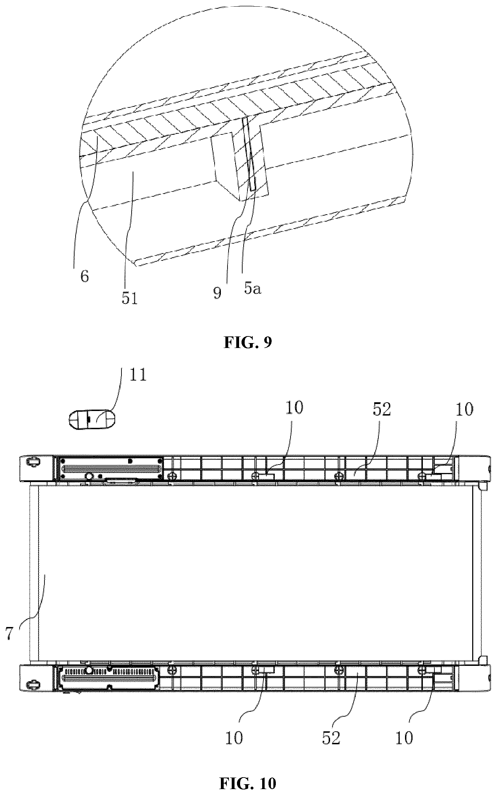

The wear-resisting plate 6 is arranged between the belt 7 and the running platform 5, and multiple reinforcing plates 9 are arranged under the wear-resisting plate 6. The multiple reinforcing plates 9 are embedded into the running platform 5 from an upper side of the running platform 5. Specifically, as shown in FIG. 8 and FIG. 9, the surface on the upper side of the running platform 5 is provided with the same number of grooves 5a as the reinforcing plates 9, and the reinforcing plates 9 are embedded into the corresponding number of grooves 5a, thus achieving support reinforcement and shock absorption effects on the body of the running platform 5.

The cushion block 10 is arranged at the lower side of the running platform 5. Specifically, as shown in FIG. 10, the cushion block 10 is arranged below the support portion 52 of the running platform 5 for anti-skid and sound insulation. The remote controller 11 can be used to transmit an instruction to the controller 3 to control the mode of the treadmill.

According to the treadmill provided by the present disclosure, the horizontal rhythm which is beneficial to physiological health is used to achieve a variety of exercise modes, thus improving the use experience and fitness effect of the user. Moreover, multiple interaction modes are provided to control the driving modes of the device, making the use more convenient for user. By using the integrated running platform, the assembly efficiency can be improved, and the cost is saved, and the treadmill is more portable and miniaturized, and suitable for home use. The servo motor is arranged on an inner side of the running platform of the treadmill, so as to save the space and improve the aesthetics.

Unless otherwise defined, technical terms or scientific terms used herein shall have their ordinary meanings as understood by those of ordinary skill in the art. The words "first", "second", "third" and the like used in the patent application specification and claims of the present disclosure do not indicate any order, quantity or importance, but are only used to distinguish different components. Similarly, similar words such as "a" or "an" do not mean a quantity limit, but mean that there is at least one. Similar words such as "including" or "comprising" mean that the elements or objects before "including" or "comprising" cover the elements or objects listed after "including" or "comprising" and their equivalents, and do not exclude other elements or objects. Similar words such as "connecting" or "coupling" are not limited to physical or mechanical connection, but may include electrical connection, whether direct or indirect. "Up", "down", "left" and "right" are only used to express the relative positional relationship. When the absolute position of the described object changes, the relative positional relationship may also change accordingly.

Any modification, equivalent replacement, improvement, etc. made within the principle of the present disclosure should be included in the scope of protection of the present disclosure. Although the present disclosure has been particularly shown and described with reference to preferred embodiments, it should be understood by those skilled in the art that various changes in form and details can be made in the present disclosure without departing from the spirit and scope of the present disclosure as defined by the appended claims, which are all within the scope of protection of the present disclosure.

## Claims

1. A driving device of a treadmill, comprising a roller (1) of the treadmill, a servo motor (2), and a controller (3);
the servo motor (2) is internally and/or externally provided with an encoder, and the encoder is connected to the controller (3); and a transmission shaft of the servo motor (2) is in transmission connection with the roller (1) of the treadmill.

2. The driving device of a treadmill according to claim 1, wherein the controller (3) is used to transmit a control signal to the encoder, thus adjusting change direction and change amplitude of a rotation angle of the servo motor (2);
when the rotation angle of the servo motor (2) is in bidirectional alternate change, the roller(1) of the treadmill is driven to vibrate horizontally; and when the rotation angle of the servo motor (2) is in unidirectional change, the roller (1) of treadmill is driven to rotate in one direction.

3. The driving device of a treadmill according to claim 2, wherein in the bidirectional alternate change of the rotation angle of the servo motor (2):
when a change amplitude of a rotation angle of a rotor of the servo motor (2) in a first direction is greater than that in a second direction, the roller (1) of the treadmill is driven to vibrate horizontally in the process of unidirectional rotation in the first direction; and
a frequency of the horizontal vibration corresponds to a difference between the change amplitude of the rotation angle in the first direction and the change amplitude of the rotation angle in the second direction.

4. The driving device of a treadmill according to claim 2, wherein in one bidirectional alternate change cycle of the rotor of the servo motor (2):
during the process that the rotor of the servo motor (2) undergoes the rotation angle change with a first amplitude in the first direction, when the rotor of the servo motor (2) changes back and forth in the first direction and the second direction with a second amplitude within a set vibration cycle, the roller (1) of the treadmill is driven to horizontally sweep at a first frequency and meanwhile horizontally vibrate at a second frequency;
the set vibration cycle is smaller than the bidirectional alternate change cycle, the first amplitude is greater than the second amplitude, and the first frequency is less than the second frequency.

5. The driving device of a treadmill according to any one of claims 1~4, further comprising:
a speed regulating transmission mechanism (4), wherein the transmission shaft of the servo motor (2) is connected to the roller (1) of the treadmill by means of the speed regulating transmission mechanism (4)..

6. The driving device of a treadmill according to any one of claims 1~4, wherein the controller (3) comprises a communication module;
the communication module is any one or a hybrid module of a plurality of a Bluetooth module, a WiFi module, an infrared receiving module, a wireless radio frequency receiving module, and a cellular communication module.

7. A treadmill, comprising: a running platform (5), a wear-resisting plate (6) arranged on an upper side of the running platform (5), a belt (7) wrapped around the roller (1) of the treadmill and the running platform (5), wherein the treadmill further comprises the driving device of a treadmill according to any one of claims 1, and the roller (1) of the treadmill in the driving device of the treadmill is in transmission connection with the belt (7).

8. The treadmill according to claim 7, wherein the running platform (5) is of an integrally formed structure.

9. The treadmill according to claim 7, wherein the material of the running platform is plastics or the composite of plastics and fiber.

10. The treadmill according to claim 9, wherein the plastics maybe polycarbonate, nylon, ABS (acrylonitrile-butadiene-styrene), or polypropylene.

11. The treadmill according to claim 7, wherein the material of the running platform maybe polypropylene with 10-30wt% of glass fiber .

12. The treadmill according to claim 7, wherein the treadmill further comprises a plurality of reinforcing plates (9) arranged under the wear-resisting plate (6), and the multipleplurality of reinforcing plate (9) are embedded into the running platform (5) from thean upper side of the running platform (5) .

13. The treadmill according to claim 12, wherein, the surface on the upper side of the running platform (5) is provided with the same number of grooves (5a) as the reinforcing plates (9), and the reinforcing plates (9) are embedded into the corresponding number of grooves (5a).
